Europäisches Patentamt

European Patent Office

Office européen des brevets

(19)

(11) **EP 0 560 144 B1**

(12) **EUROPÄISCHE PATENTSCHRIFT**

(45) Veröffentlichungstag und Bekanntmachung des Hinweises auf die Patenterteilung:
**25.09.1996 Patentblatt 1996/39**

(51) Int Cl.6: **C09C 1/00**, C09D 7/12, C09D 11/00, C08K 3/00, A61K 7/00, C09C 3/06

(21) Anmeldenummer: **93103020.9**

(22) Anmeldetag: **26.02.1993**

(54) **Oberflächenmodifizierte Pigmente**

Surface-modified pigments

Pigments modifiés en surface

(84) Benannte Vertragsstaaten:
**DE ES FR GB IT**

(30) Priorität: **11.03.1992 DE 4207723**

(43) Veröffentlichungstag der Anmeldung:
**15.09.1993 Patentblatt 1993/37**

(73) Patentinhaber: **MERCK PATENT GmbH**
**D-64271 Darmstadt (DE)**

(72) Erfinder:
• **Herget, Gerhard, Dr.**
**W-6105 Ober-Ramstadt (DE)**
• **Herbski, Margarete**
**W-6105 Ober-Ramstadt (DE)**

• **Osterried, Karl, Dr.**
**W-6110 Dieburg (DE)**

(56) Entgegenhaltungen:
**FR-A- 1 326 901**

• **CHEMICAL ABSTRACTS, vol. 113, no. 10, 3. September 1990, Columbus, Ohio, US; abstract no. 80588n, Seite 122**
• **DATABASE WPIL Section Ch, Week 8931, Derwent Publications Ltd., London, GB; Class A60, AN 89-223232**
• **DATABASE WPIL Section Ch, Week 9242, Derwent Publications Ltd., London, GB; Class A60, AN 92-345112**

**Beschreibung**

Die vorliegende Erfindung betrifft oberflächenmodifizierte Pigmente, die zur Verbesserung des Absetz- und Aufrührverhaltens mit einem Gemisch bestehend aus zwei Metalloxiden, ausgewählt aus der Gruppe Siliziumdioxid, Aluminiumoxid und Zirkoniumdioxid, nachbeschichtet sind.

Plättchenförmige Pigmente mit hoher Dichte sind insofern problematisch in der Handhabung, als die Pigmente sich in allen flüssigen Anwendermedien stark absetzen und dann zu einem sehr festen Sedimentkuchen zusammenbacken können. Dieser Kuchen ist in der Regel nur schwer wieder aufrührbar.

So wurden unter anderem zahlreiche Methoden entwickelt, um das Problem der Einarbeitung und Handhabung von Pigmenten in flüssigen Anwendermassen zu lösen.

Eine Möglichkeit dieses Absetzverhalten zu verbessern ist, daß man das Anwendermedium verändert, indem z. B. Antiabsetzmittel oder andere geeignete Additive hinzugefügt werden. Unter anderem ist hier eine Möglichkeit die Verwendung von feinteiligem $SiO_2$, z.B. Aerosil. Aus der DE 39 22 178 ist bekannt, daß man durch Mischen einer Suspension bestehend aus einem plättchenförmigen Substrat mit sphärischen Teilchen, wie z.B. $SiO_2$, $TiO_2$ oder $ZrO_2$ deagglomerierte und gut dispergierbare Pigmente erhält. Nachteil dieser Methode ist eine in den meisten Fällen damit verbundene Glanzreduzierung des Endergebnisses.

Eine weitere Möglichkeit zur Verbesserung des Absetzverhaltens ist die Variation der Pigmentoberfläche. In der DE 2106613 werden mit Metalloxiden beschichtete Glimmerplättchen mit Siliziumdioxid nachbeschichtet, während aus der EP 0446986 die Nachbeschichtung mit Aluminiumoxid bekannt ist. Mit Silicat- bzw. mit $Al_2O_3$ beschichtete Pigmente sind schwer dispergierbar und weisen zusätzlich Glanzeinbußen in Druckfarben und Lackabstrichen auf.

In der JP 04-249,584 werden $TiO_2$/Glimmer-Substrate zur Erhöhung der UV-Stabilität mit einer $Ce_2O_3/Sb_2O_3$-Schicht und optional mit einer $SiO_2/Al_2O_3$-Schicht nachbeschichtet.

Aus der JP 75,668 (1990) ist die Beschichtung plättchenförmiger Substrate wie Glimmer, $TiO_2$-Plättchen mit $ZrSiO_4$ bekannt um die Dispergierbarkeit und das Skin-Feeling zu erhöhen.

In der JP 1-158,077 werden $TiO_2$/Glimmerpigmente beschrieben, die zunächst einem Reduktionsprozeß unterworfen werden, wobei Titansuboxide entstehen, und anschließend mit einem oder zwei Metalloxiden ausgewählt aus der Gruppe $SiO_2$, $Al_2O_3$ oder ZnO zur Erhöhung der Farbintensität nachbeschichtet werden.

Überraschenderweise wurde nun gefunden, daß bei der Nachbeschichtung von Pigmenten mit einem Gemisch bestehend aus zwei Metalloxiden, ausgewählt aus der Gruppe Siliziumdioxid, Aluminiumoxid und Zirkoniumoxid das Absetzverhalten der Pigmente und gleichzeitig das Aufrührverhalten verbessert werden, ohne daß die zuvor genannten Nachteile zu beobachten sind.

Gegenstand der Erfindung sind somit oberflächenmodifizierte Pigmente, welche auf plättchenförmigen Substraten basieren und mit einem farbigen oder farblosen Metalloxid allein oder in Mischung in einer einheitlichen Schicht oder in aufeinander-folgenden Schichten belegt sind, dadurch gekennzeichnet, daß sie zur Verbesserung des Absetz- und Aufrührverhaltens mit 0,5-30 Gew. % bezogen auf das Gesamtpigment eines Metalloxidgemisches bestehend aus $SiO_2/Al_2O_3$ oder $ZrO_2/Al_2O_3$ nachbeschichtet sind,
mit den Maßgaben, daß

(a) eine $Ce_2O_3/Sb_2O_3$-Zwischenschicht, und
(b) Titansuboxid- und/oder Eisensuboxid- Zwischenschicht,

ausgeschlossen sind.

Gegenstand der Erfindung ist auch ein Verfahren zur Herstellung der oberflächenmodifizierten Pigmente nach Anspruch 1, wobei ein Gemisch aus zwei Metalloxiden auf das Pigment aufgefällt wird, dadurch gekennzeichnet, daß man in eine wäßrige Pigmentsuspension zwei wasserlösliche Verbindungen von Silizium, Aluminium oder Zirkonium so zusetzt, daß die wasserhaltigen Oxide auf dem Pigment abgeschieden werden, und daß man das so nachbeschichtete Pigment abtrennt, wäscht, trocknet und gegebenenfalls glüht.

Gegenstand der Erfindung sind weiterhin oberflächenmodifizierte Pigmente, welche auf plättchenförmigen Substraten basieren und mit einem farbigen oder farblosen Metalloxid allein oder in Mischung in einer einheitlichen Schicht oder in aufeinanderfolgenden Schichten belegt sind und zur Verbesserung des Absetz- und Aufrührverhaltens mit 0,5-30 Gew. % bezogen auf das Gesamtpigment eines Metalloxidgemisches bestehend aus $ZrO_2/SiO_2$ nachbeschichtet sind, hergestellt in dem in eine wäßrige Pigmentsuspension zwei wasserlösliche Verbindungen von Silizium und Zirkonium so zusetzt, daß die wasserlöslichen Oxide auf dem Pigment abgeschieden werden, und daß man das so nachbeschichtete Pigment abtrennt, wäscht und trocknet.

Für das Verfahren können alle üblichen plättchenförmigen Substrate verwendet werden, insbesondere Schichtsilikate und Oxide oder mit Oxiden beschichtete Materialien, da sie an der Oberfläche reaktive OH-Gruppen besitzen. Beispiele sind hierfür einerseits Glimmer, Talkum, Kaolin oder andere vergleichbare Mineralien, andererseits auch plättchenförmiges Eisenoxid, Wismutoxychlorid sowie Aluminiumplättchen oder metalloxidbeschichtete Aluminiumplättchen. Für die Nachbeschichtung sind insbesondere geeignet Glimmerbeschichtungen mit farbigen oder farblosen Metalloxiden, wie $TiO_2$, $Fe_2O_3$, $SnO_2$, $Cr_2O_3$, ZnO und anderen Metalloxiden, allein oder in Mischung in einer einheitlichen Schicht oder in aufeinander-folgenden Schichten. Diese sogenannten Perlglanzpigmente sind z.B. aus den deutschen Patenten und Patentanmeldungen 14 67 468, 19 59 998, 20 09 566, 22 14 545, 22 15 191, 22 44 298, 23 13 331, 25 22 572, 31 37 808, 31 37 809, 31 51 354, 31 51 355, 32 11 602 und 32 35 017 bekannt und im Handel erhältlich, z.B. unter dem Warenzeichen Iriodin® von der Firma E. Merck, Darmstadt.

Das erfindungsgemäße Verfahren ist einfach und läßt sich leicht handhaben. Die Nachbeschichtung kann auf ein bereits geglühtes Substrat erfolgen. Ebenso wirksam ist die Nachbeschichtung, wenn sie auf ein nach der Herstellung nur getrocknetes, noch nicht geglühtes Substrat aufgebracht wird.

Bevorzugt findet die Nachbeschichtung mit $SiO_2/Al_2O_3$ oder $ZrO_2/SiO_2$ oder $ZrO_2/Al_2O_3$ in einem Einschrittverfahren - anschließend an die Substratherstellung - statt. Die nachbeschichteten Pigmente werden anschließend getrocknet und gegebenenfalls geglüht. Durch diese Vorgehensweise werden Zwischenprozesse eingespart.

Die Herstellung der Pigmente geschieht durch Vermischen der in wäßriger Suspension vorliegenden Substrate mit dem Beschichtungsreagenz. Das Beschichtungsreagenz setzt sich zusammen aus einer wasserlöslichen anorganischen Siliziumverbindung und einem Aluminium- oder Zirkoniumsalz oder aus einem Zirkonium- und einem Aluminiumsalz. Die Metallverbindungen können nacheinander oder gleichzeitig zu der Suspension zudosiert werden. Bei der Beschichtung mit $SiO_2/Al_2O_3$ bzw. $SiO_2/ZrO_2$ wird zu der wäßrigen Suspension vorzugsweise zuerst die wasserlösliche anorganische Siliziumverbindung zugegeben, und anschließend das Aluminium- bzw. das Zirkoniumsalz in Wasser gelöst oder in fester Form zugegeben. Geeignete anorganische Siliziumverbindungen sind die unter dem Namen "Wasserglas" in den Handel kommenden wäßrigen Lösungen von Alkalisilicaten, wie z.B. Kaliwasserglas und Natronwasserglas. Vorzugsweise wird bei der Nachbeschichtung Natronwasserglas verwendet. Geeignete Zirkonium- bzw. Aluminiumsalze sind insbesondere die Halogenide, Nitrate und Sulfate, vorzugsweise die Chloride. Durch geeignete pH- und Temperaturbedingungen wird eine Ausfällung der Silizium-, Zirkonium- bzw. Aluminiumsalze bzw. -hydroxide, -oxide bewirkt, die sich auf den in der Suspension verteilten plättchenförmigen Substraten niederschlagen.

Die jeweils dafür notwendigen Bedingungen sind dem Fachmann bekannt und können aus einschlägigen Lehrbüchern entnommen werden. Nach der Ausfällung werden die nachbeschichteten Pigmente abgetrennt, gewaschen und getrocknet und gegebenenfalls geglüht.

Der Anteil an Metalloxiden beträgt bezogen auf das Gesamtpigment 0,3-50 Gew.%, vorzugsweise 0,5-30 % und insbesondere 1-15 Gew.%. Die Metalloxide können für die Nachbeschichtung in jedem Verhältnis miteinander gemischt werden. Vorzugsweise werden die $SiO_2/Al_2O_3$- bzw. $ZrO_2/SiO_2$- bzw. $ZrO_2/Al_2O_3$-Gemische im Gewichts-Verhältnis 1:5 bis 5:1 eingesetzt, insbesondere bevorzugt werden 1:1- und 2:1-Gemische.

Die nach dem erfindungsgemäßen Verfahren nachbeschichteten Perlglanzpigmente zeigen ein verzögertes Absetzen und eine verbesserte Wiederaufrührbarkeit eines aufgetretenen Bodensatzes. Überraschend ist auch die Beobachtung, daß bei den nachbeschichteten Pigmenten keine Glanzminderung zu beobachten ist.

Insbesondere bei den mit $SiO_2/Al_2O_3$ nachbeschichteten Perlglanzpigmenten beobachtet man in den meisten Fällen eine Glanzerhöhung. Die Glanzerhöhung ist um so größer, je höher der Aluminiumoxidanteil im $SiO_2/Al_2O_3$-Gemisch ist. Bevorzugt werden $SiO_2/Al_2O_3$-Nachbeschichtungen mit 1:1- und 2:1- Gemischen.

Die erfindungsgemäßen Pigmente sind mit einer Vielzahl von Farbsystemen kompatibel, vorzugsweise aus dem Bereich der Lacke, Farben und Druckfarben.

Gegenstand der Erfindung ist somit auch die Verwendung der nachbeschichteten Pigmente in Formulierungen wie Farben, Lacke, Druckfarben, Kunststoffe und zur Kosmetikpräparation.

Zur Erläuterung der Erfindung dienen die folgenden Beispiele:

Beispiel 1 - Belegung mit 5 % $SiO_2$ für Vergleichsversuche

Eine Pigmentsuspension bestehend aus 200 g Iriodin 123 ($TiO_2$-/$SnO_2$-Glimmer mit einer Teilchengröße von 5-20 μm von der Fa. E. Merck, Darmstadt, Art.-Nr. 4842) in 3 l Wasser wird auf 60 °C erhitzt und mit 10%iger Natronlauge auf pH = 9,0 eingestellt. Die Natronwasserglaslösung (im Verhältnis 1:1 mit Wasser verdünnt; 54 ml in 1500 ml Wasser gelöst) wird langsam zu der Pigmentsuspension dosiert. Der pH-Wert wird dabei mit 10%iger Salzsäure konstant gehalten. Danach wird zunächst 15 min bei pH = 9,0 gerührt und weitere 15 min bei pH = 6,5. Die Suspension wird auf 95 °C erwärmt und 1 h bei dieser Temperatur gerührt. Man läßt abkühlen, saugt das Lösungsmittel ab, wäscht chloridfrei und trocknet das Produkt. Ein Teil des Produkts wird bei 850 °C geglüht.

Beispiel 2 - Belegung mit 2,5 % $SiO_2$/2,5 % $Al_2O_3$ (1:1)

Analog Beispiel 1 wird eine Pigmentsuspension bestehend aus 200 g Iriodin 123 in 3 l Wasser auf 60 °C erhitzt und mit 10%iger Natronlauge auf pH = 9,0 eingestellt. Anschließend wird die Natronwasserglaslösung (im Verhältnis 1:1 mit Wasser verdünnt; 27 ml in 750 ml Wasser gelöst) zudosiert. Es wird 15 min gerührt und anschließend mit 10%iger HCl auf pH 6,5 eingestellt und weitere 15 min gerührt. Nach Zugabe von 23,68 g AlCl$_3 \cdot$ 6 H$_2$O und 13,9 g Na$_2$SO$_4$ wird die Suspension innerhalb von 15 min auf 95 °C erhitzt und 1 h bei dieser Temperatur gerührt. Man läßt die Suspension abkühlen, saugt ab, wäscht chloridfrei und trocknet.

Ein Teil des erhaltenen modifizierten Pigments wird 30 min bei 850 °C geglüht.

Beispiel 3

a) Belegung von Glimmer mit 1,7 % SnO$_2$ und 55,1 % TiO$_2$

500 g Glimmer mit einer Teilchengröße von 5-25 µm in 10 l Wasser werden auf 75 °C erhitzt. Bei einem pH-Wert von 1,8 wird eine Lösung bestehend aus 19,75 g SnCl$_4 \cdot$ 5 H$_2$O in 600 ml Wasser zudosiert und danach wird 5 Minuten gerührt. Anschließend werden 1800 ml TiCl$_4$-Lösung (367 g TiCl$_4$/l Wasser) zugegeben, wobei der pH-Wert mit konzentrierter Natronlauge konstant gehalten wird. Nach dem Erkalten wird die Suspension abgesaugt, chloridfrei gewaschen und bei 90 °C getrocknet. Ein Teil des Produkts wird 0,5 h bei 850 °C geglüht.

b) Belegung mit 2,5 % SiO$_2$/2,5 % Al$_2$O$_3$ (1:1)

100 g des aus Beispiel 3a erhaltenen getrockneten Pigments werden in 2 l Wasser suspendiert und auf 60 °C erhitzt. Der pH-Wert wird mit 10%iger Natronlauge auf 9,0 eingestellt. Anschließend wird die Natronwasserglaslösung (im Verhältnis 1:1 mit Wasser verdünnt; 13,5 ml in 375 ml Wasser gelöst) zugegeben und 15 Minuten nachgerührt. Der pH-Wert wird mit 10%iger Natronlauge auf 6,5 eingestellt. Nach 15 Minuten Rühren werden zunächst 11,84 g AlCl$_3 \cdot$ 6 H$_2$O und danach 6,95 g Natriumsulfat in fester Form zugegeben. Nach Zugabe wird die Suspension analog Beispiel 2 erhitzt und aufgearbeitet. Das Produkt wird 15-30 Minuten bei 850 °C geglüht.

c) Belegung mit 5 % SiO$_2$/5 % Al$_2$O$_3$ (1:1)

900 ml der Pigmentsuspension aus a) werden mit 2 l Wasser verdünnt. Analog Beispiel 3b erfolgt die Belegung mit Natronwasserglaslösung (im Verhältnis 1:1 mit Wasser verdünnt; 40,5 ml in 1125 ml Wasser gelöst), 35,52 g AlCl$_3 \cdot$ 6 H$_2$O und 20,85 g Natriumsulfat. Das nachbeschichtete Pigment wird nach der Aufarbeitung getrocknet. Ein Teil des Produkts wird 30 Minuten bei 850 °C geglüht.

Beispiel 4

a) Belegung von Glimmer mit 1,7 % SnO$_2$ und 52,6 % TiO$_2$

500 g Glimmer (Teilchengröße 5-25 µm) in 10 l Wasser werden auf 75 °C erhitzt. Bei einem pH-Wert von 1,8 wird zunächst die SnCl$_4$-Lösung (19,75 g SnCl$_4 \cdot$ 5 H$_2$O in 600 ml Wasser) zugesetzt, 5 Minuten gerührt und danach 1700 ml TiCl$_4$-Lösung (367 g TiCl$_4$/l Wasser). Der pH-Wert wird dabei mit konzentrierter Natronlauge konstant gehalten. Das in der Suspension vorliegende beschichtete Glimmerpigment wird ohne Aufarbeitung direkt nachbeschichtet.

b) Belegung mit 5 % SiO$_2$

900 ml der Pigmentsuspension aus a) werden mit 2 l Wasser verdünnt. Analog Beispiel 1 wird die Belegung bei 60 °C und pH = 9,0 mit Natronwasserglaslösung (im Verhältnis 1:1 mit Wasser verdünnt, 54 ml in 1500 ml Wasser gelöst) durchgeführt. Das nachbeschichtete Pigment wird nach der Aufarbeitung getrocknet. Ein Teil des Produkts wird 15-30 Minuten bei 850 °C geglüht.

c) Belegung mit 5 % SiO$_2$ und 5 % Al$_2$O$_3$ (1:1)

Die Belegung erfolgt analog Beispiel 2. 100 g des getrockneten Pigments aus Beispiel 4a werden zunächst in 2 l Wasser suspendiert. Zu dieser Lösung werden zunächst Natronwasserglaslösung (im Verhältnis 1:1 mit Wasser verdünnt; 27 ml mit H$_2$O auf 750 ml aufgefüllt) und anschließend 23,68 g AlCl$_3 \cdot$ 6 H$_2$O und, 13,90 g Natriumsulfat in fester Form zugegeben, es wird 1 h bei 95-100 °C gerührt. Anschließend läßt man die Lösung erkalten, saugt ab, wäscht chloridfrei und trocknet. Ein Teil des Produkts wird 30 Minuten bei 850 °C geglüht.

Beispiel 5 - Belegung mit 5 % SiO$_2$ und 2,5 % Al$_2$O$_3$ (2:1)

Analog Beispiel 3 werden 500 g Glimmer mit 1,7 % SnO$_2$ und 55,1 % TiO$_2$ in wäßriger Lösung beschichtet. Die erhaltene Pigmentsuspension wird auf 60 °C erhitzt und mit 10%iger NaOH auf pH = 9 eingestellt. Nach Zugabe der Natronwasserglaslösung (im Verhältnis 1:1 mit Wasser verdünnt; 39 ml in 1000 ml Wasser) wird 15 Minuten gerührt und der pH mit 10%iger HCl auf 6,5 eingestellt. Nach 15 Minuten Rühren werden 17,76 g AlCl$_3 \cdot$ 6 H$_2$O und 10,43 g Natriumsulfat in fester Form zugegeben. Die erhaltene Suspension wird 1 h bei 95 °C gerührt. Anschließend wird die wäßrige Lösung abgesaugt, chloridfrei gewaschen und das Produkt getrocknet. Ein Teil des Produkts wird 0,5 h bei 850 °C geglüht.

Beispiel 6

a) Belegung von Glimmer mit 1,3 % $SnO_2$ und 55,6 % $TiO_2$

10 kg F-Glimmer (Teilchengröße 5-25 μm) in 200 l VE-Wasser werden auf 75 °C erhitzt. Bei einem pH-Wert von 1,8 wird zunächst die $SnCl_4$-Lösung (30,6 g $SnCl_4 \cdot 5 H_2O$ und 2 l konz. HCl mit VE-Wasser auf 5,3 l aufgefüllt) zugesetzt, 40 min nachgerührt und danach 34 l $TiCl_4$-Lösung (388 g $TiCl_4$/l Wasser). Der pH-Wert wird dabei mit 32 %iger Natronlauge konstant gehalten.

b) Belegung mit 1 % $SiO_2$ und 1 % $Al_2O_3$ (1:1)

3250 ml Pigmentsuspension (entspricht 200 g Pigment) werden einmal dekantiert und danach mit 1800 ml VE-Wasser aufgefüllt (Pigmentkonzentration 10 %). Die Pigmentsuspension wird auf 40 °C erhitzt. Bei einem pH-Wert von 9,0 wird zunächst Natronwasserglaslösung (im Verhältnis 1:1 mit Wasser verdünnt; 10,8 ml mit Wasser auf 300 ml aufgefüllt) zugesetzt, 0.5 h nachgerührt und anschließend 9,47 g $AlCl_3 \cdot 6 H_2O$ in fester Form zugegeben. Es wird auf 75 °C erhitzt und 75 min bei dieser Temperatur gehalten. Der auf 3,6 gefallene pH-Wert wird mit 2,5 %iger Natronlauge langsam auf pH-Wert 8 eingestellt und nochmals 1 h bei 75 °C nachgerührt. Das aufgearbeitete Pigment wird bei 140 °C getrocknet und anschließend 0,5 h bei 850 °C geglüht.

**Absetz- und Redispersionsversuche**

I. Sedimentationsvolumen, Dorntest und Spatelprobe

Die nachoeschichteten Pigmente sowie das jeweilige Vergleichspigment (Nullpigment) werden in den kommerziell erhältlichen Dispersionslack der Fa. Siegwerke Druckfarben mittels eines Flügelradrührers eingearbeitet. Die Pigmentkonzentration beträgt in etwa 22,5 Gew.%. Mit VE-Wasser wird jeweils eine einheitliche Viskosität von 29,0 ± 0,5 sec DIN 4 Auslaurbecher eingestellt.

Die pigmentierten Dispersionslacke werden in 50 ml Meßzylinder gefüllt. Während 30 Tagen wird zu jeweils gleichen Zeiten das Sedimentationsvolumen in ml bestimmt.

## Tabelle 1

| Beispiel | Pigment + Belegung | | Sedimentvolumen in ml nach Standzeit (h) | | | | | | | | | |
|---|---|---|---|---|---|---|---|---|---|---|---|---|
| | | | 1 h | 2 h | 3 h | 5 h | 7 h | 1 T | 2 T | 5 T | 15 T | 30 T |
| - | Nullprobe 1 - | Iriodin 123 (Verkaufsware) | 50,0 | 49,9 | 49,8 | 49,3 | 49,2 | 45,0 | 38,0 | 21,0 | 19,1 | 19,1 |
| 3b) | Nullprobe 1 + | 2,5 % $SiO_2$/ 2,5 % $Al_2O_3$ | 50,0 | 49,9 | 49,8 | 49,3 | 49,2 | 47,3 | 42,2 | 30,2 | 22,3 | 22,2 |
| 3c) | Nullprobe 1 + | 5 % $SiO_2$/ 5 % $Al_2/O_3$ | 50,0 | 49,9 | 49,8 | 49,4 | 49,3 | 48,2 | 46,2 | 40,0 | 25,8 | 25,5 |
| 4 | Nullprobe 2 - | Herstellung von Iriodin 123 + Trocknung | 50,0 | 49,9 | 49,7 | 49,4 | 49,3 | 41,7 | 31,0 | 18,3 | 18,2 | 18,1 |

| Beispiel | Pigment + | Belegung | Sedimentvolumen in ml nach Standzeit (h) | | | | | | | | | |
|---|---|---|---|---|---|---|---|---|---|---|---|---|
| | | | 1 h | 2 h | 3 h | 5 h | 7 h | 1 T | 2 T | 5 T | 15 T | 30 T |
| 4b) | Nullprobe 2 + | 5 % SiO$_2$ ohne Zwischen- trocknung | 49,9 | 49,9 | 49,8 | 49,4 | 49,3 | 48,6 | 47,6 | 44,3 | 30,7 | 23,7 |
| 4c) | Nullprobe 2 + | 5 % SiO$_2$/ 5 % Al$_2$O$_3$ ohne Zwischen- trocknung | 50,0 | 49,9 | 49,8 | 49,4 | 49,3 | 48,5 | 47,4 | 43,8 | 27,0 | 24,4 |
| 4 | Nullprobe 3 = | Nullprobe 2 + Trocknung + nicht Glühen | 50,0 | 49,9 | 49,7 | 49,6 | 49,5 | 42,0 | 32,5 | 16,9 | 17,2 | 17,2 |
| 5 | Nullprobe 3 | + 5 % SiO$_2$/ 2,5 % Al$_2$O$_3$ ohne Zwischen- trocknung | 50,0 | 50,0 | 50,0 | 49,9 | 49,8 | 48,2 | 47,3 | 43,4 | 29,8 | 26,4 |

Mit einem speziellen Meßdorn wird am 30. Tag die Eindringtiefe im Sediment in mm bestimmt. Je größer die Eindringtiefe, desto weicher ist das Sediment.

Die Wiederaufrührbarkeit der Bodensätze der pigmentierten Dispersionslacke wird mittels einer Spatelprobe bewertet.

Die koloristischen Werte wurden bestimmt an einem Gerät der Fa. Johnek Reilhofer.

Die Glanzzahl wird aus den Helligkeitswerten (L-Werten) der Lackkarten- (bzw. Rakelmuster) Meßgeometrien 22,5°/22,5° und 45°/0° nach folgender Formel berechnet:

$$\text{Glanzzahl} = \frac{L_{22,5°/22,5°} - L_{45°/0°}}{L_{22,5°/22,5°}} \times 100$$

## Tabelle 2

| Beispiel | Pigment | Sedimentations-volumen nach 30 Tagen in ml | Eindringtiefe des Dorns nach 30 Tagen in mm | Wiederaufrührbarkeit Spatelprobe nach 30 Tagen | Glanzzahl Lackkarten Rakel-muster (Gew. % Pigm. im Lack) 1,7 % | 22,5 % |
|---|---|---|---|---|---|---|
| — | Nullprobe 1; Iriodin 123 geglüht | 19,1 | 50,0 | leicht | 48,0 | 23,2 |
| 3b) | Iriodin 123 + 2,5 % $SiO_2$/2,5 % $Al_2O_3$ | 22,2 | 58,6 | leicht bis sehr leicht | 50,1 | 21,9 |
| 3c) | Iriodin 123 + 5 % $SiO_2$/5 % $Al_2O_3$ | 25,5 | 67,3 | leicht bis sehr leicht | 44,8 | — |
| 4 | Nullprobe 2; Iriodin 123 getrocknet | 18,1 | 47,9 | mittel bis leicht | 47,5 | 23,4 |
| 4b) | Iriodin 123 ohne Trocknung + 5 % $SiO_2$ | 23,7 | 62,5 | leicht bis sehr leicht | 49,5 | 17,1 |
| 4c) | Iriodin 123 ohne Trocknung + 5 % $SiO_2$/5 % $Al_2O_3$ | 24,4 | 65,1 | leicht bis sehr leicht | 50,0 | 22,2 |
| 4 | Nullprobe 3; Iriodin 123 geglüht | 17,2 | 45,0 | mittel bis schwer | 45,3 | 22,3 |
| 5 | Iriodin 123 ohne Trocknung + 5 % $SiO_2$/2,5 % $Al_2O_3$ | 26,4 | 69,0 | sehr leicht | 49,5 | 15,6 |

EP 0 560 144 B1

**Patentansprüche**

1.  Oberflächenmodifizierte Pigmente, welche auf plättchenförmigen Substraten basieren und mit einem farbigen oder farblosen Metalloxid allein oder in Mischung in einer einheitlichen Schicht oder in aufeinanderfolgenden Schichten belegt sind, dadurch gekennzeichnet, daß sie zur Verbesserung des Absetz- und Aufrührverhaltens mit 0,5-30 Gew. % bezogen auf das Gesamtpigment eines Metalloxidgemisches bestehend aus $SiO_2/Al_2O_3$ oder $ZrO_2/Al_2O_3$ nachbeschichtet sind,
    mit den Maßgaben, daß

    (a) eine $Ce_2O_3/Sb_2O_3$-Zwischenschicht, und
    (b) Titansuboxid- und/oder Eisensuboxid- Zwischenschicht,

    ausgeschlossen sind.

2.  Oberflächenmodifizierte Pigmente nach Anspruch 1, dadurch gekennzeichnet, daß das Gewichtsverhältnis der zwei Metalloxide 1 : 5 bis 5 : 1 beträgt.

3.  Oberflächenmodifzierte Pigmente nach Anspruch 2, dadurch gekennzeichnet daß das Gewichtsverhältnis der zwei Metalloxide 1 :1 oder 2 :1 beträgt.

4.  Oberflächenmodifizierte Pigmente nach einem der Ansprüche 1 bis 3, dadurch gekennzeichnet, daß das Metalloxidgemisch aus $SiO_2$ und $Al_2O_3$ besteht.

5.  Oberflächemodifzierte Pigmente nach einem der Ansprüche 1 bis 4, dadurch gekennzeichnet, daß das plättchenförmige Substrat ein Schichtsilikat ist.

6.  Oberflächenmodifizierte Pigmente nach einem der Ansprüche 1 bis 5, dadurch gekennzeichnet, daß das Pigment ein mit $TiO_2$ und/oder $Fe_2O_3$ beschichtetes Glimmerplättchen ist.

7.  Verfahren zur Herstellung der oberflächenmodifizierten Pigmente nach Anspruch 1, wobei ein Gemisch aus zwei Metalloxiden auf das Pigment aufgefällt wird, dadurch gekennzeichnet, daß man in eine wäßrige Pigmentsuspension zwei wasserlösliche Verbindungen von Silizium, Aluminium oder Zirkonium so zusetzt, daß die wasserhaltigen Oxide auf dem Pigment abgeschieden werden, und daß man das so nachbeschichtete Pigment abtrennt, wäscht, trocknet und gegebenenfalls glüht.

8.  Verfahren nach Anspruch 7, dadurch gekennzeichnet, daß man als wasserlösliche anorganische Siliziumverbindung Natronwasserglas verwendet.

9.  Verfahren nach Anspruch 7 oder 8, dadurch gekennzeichnet, daß die Nachbeschichtung auf ein bereits geglühtes oder auf ein nur getrocknetes Pigment oder in einem Einschrittverfahren anschließend an die Pigmentherstellung erfolgt.

10. Verwendung der oberflächenmodifizierten Pigmente nach Anspruch 1 in Formulierungen wie Farben, Lacke, Druckfarben, Kunststoffe und zur Kosmetikpräparation.

11. Formulierungen enthaltend oberflächenmodifizierte Pigmente nach Anspruch 1.

12. Oberflächenmodifizierte Pigmente, welche auf plättchenförmigen Substraten basieren und mit einem farbigen oder farblosen Metalloxid allein oder in Mischung in einer einheitlichen Schicht oder in aufeinanderfolgenden Schichten belegt sind und zur Verbesserung des Absetz- und Aufrührverhaltens mit 0,5-30 Gew. % bezogen auf das Gesamtpigment eines Metalloxidgemisches bestehend aus $ZrO_2/SiO_2$ nachbeschichtet sind, hergestellt in dem in eine wäßrige Pigmentsuspension zwei wasserlösliche Verbindungen von Silizium und Zirkonium so zusetzt, daß die wasserlöslichen Oxide auf dem Pigment abgeschieden werden, und daß man das so nachbeschichtete Pigment abtrennt, wäscht und trocknet.

13. Verwendung der oberflächenmodifizierten Pigmente nach Anspruch 12 in Formulierungen wie Farben, Lacke, Druckfarben, Kunststoffe und zur Kosmetikpräparation.

**14.** Formulierungen enthaltend oberflächenmodifizierte Pigmente nach Anspruch 12.

## Claims

**1.** Surface-modified pigments based on platelet-shaped substrates and coated with a coloured or colourless metal oxide, alone or mixed, in a single layer or in successive layers, characterized in that to improve their settling and redispersion behaviour they have been aftercoated with 0.5-30 % by weight, based on the total pigment, of a metal-oxide mixture consisting of $SiO_2/Al_2O_3$ or $ZrO_2/Al_2O_3$, subject to the provisos that

(a) a $Ce_2O_3/Sb_2O_3$ interlayer and
(b) titanium suboxide and/or iron suboxide interlayer

shall be excluded.

**2.** Surface-modified pigments according to Claim 1, characterized in that the weight ratio of the two metal oxides is within the range from 1 : 5 to 5 : 1.

**3.** Surface-modified pigments according to Claim 2, characterized in that the weight ratio of the two metal oxides is within the range from 1 : 1 to 2 : 1.

**4.** Surface-modified pigments according to any one of Claims 1 to 3, characterized in that the metal oxide mixture consists of $SiO_2$ and $Al_2O_3$.

**5.** Surface-modified pigments according to any one of Claims 1 to 4, characterized in that the platelet-shaped substrate is a sheet-silicate.

**6.** Surface-modified pigments according to any one of Claims 1 to 5, characterized in that the pigment is a $TiO_2$- and/or $Fe_2O_3$-coated mica platelet.

**7.** Process for preparing the surface-modified pigments of Claim 1 by precipitating a mixture of two metal oxides onto the pigment, characterized in that two water-soluble compounds of silicon, aluminium or zirconium are added to an aqueous pigment suspension in such a way that the water-containing oxides are deposited on the pigment and in that the pigment thus aftercoated is separated off, washed, dried and optionally calcined.

**8.** Process according to Claim 7, characterized in that sodium silicate is used as water-soluble inorganic silicon compound.

**9.** Process according to Claim 7 or 8, characterized in that the aftercoating takes place onto an already calcined or onto a merely dried pigment or in a one-step process in-line with the making of the pigment.

**10.** The use of the surface-modified pigments of Claim 1 in formulations such as paints, varnishes, printing inks, plastics or for cosmetics preparation.

**11.** Formulations comprising surface-modified pigments according to Claim 1.

**12.** Surface-modified pigments based on platelet-shaped substrates and coated with a coloured or colourless metal oxide, alone or mixed, in a single layer or in successive layers and, to improve their settling and redispersion behaviour, aftercoated with 0.5-30 % by weight, based on the total pigment, of a metal-oxide mixture consisting of $ZrO_2/SiO_2$, prepared by a process wherein two water-soluble compounds of silicon and zirconium are added to an aqueous pigment suspension in such a way that the water-soluble oxides are deposited on the pigment and the pigment thus aftercoated is separated off, washed and dried.

**13.** The use of the surface-modified pigments of Claim 12 in formulations such as paints, varnishes, printing inks, plastics or for cosmetics preparation.

**14.** Formulations comprising surface-modified pigments according to Claim 12.

**Revendications**

1. Pigments à surface modifiée basés sur des substrats en forme de feuillets et recouverts d'un oxyde métallique coloré ou incolore, seul ou mélangé en une couche unique ou en couches successives, caractérisés en ce qu'ils sont encore recouverts, pour améliorer leur comportement de dépôt et de remuage, de 0,5-30% en poids par rapport à la totalité du pigment d'un mélange d'oxydes métalliques constitué de $SiO_2/Al_2O_3$ ou de $ZrO_2/Al_2O_3$, sous réserve que

   (a) une couche intermédiaire de $Ce_2O_3/Sb_2O_3$ et
   (b) une couche intermédiaire de sous-oxyde de titane et/ou de sous-oxyde de fer

   sont exclues.

2. Pigments à surface modifiée selon la revendication 1, caractérisés en ce que le rapport pondéral des deux oxydes métalliques s'élève à 1:5 à 5:1.

3. Pigments à surface modifiée selon la revendication 2, caractérisés en ce que le rapport pondéral des deux oxydes métalliques s'élève à 1:1 ou 2:1.

4. Pigments à surface modifiée selon l'une des revendications 1 à 3, caractérisés en ce que le mélange d'oxydes métalliques se compose de $SiO_2$ et d'$Al_2O_3$.

5. Pigments à surface modifiée selon l'une des revendications 1 à 4, caractérisés en ce que le substrat en forme de feuillet est un silicate stratiforme.

6. Pigment à surface modifiée selon l'une des revendications 1 à 5, caractérisé en ce que le pigment est un feuillet de mica recouvert de $TiO_2$ et/ou de $Fe_2O_3$.

7. Procédé de préparation des pigments à surface modifiée selon la revendication 1, dans lequel on précipite un mélange de deux oxydes métalliques sur le pigment, caractérisé en ce qu'on ajoute dans une suspension aqueuse de pigment deux composés de silicium, d'aluminium ou de zirconium solubles dans l'eau de manière que les oxydes contenant de l'eau se déposent sur le pigment, et en ce qu'on sépare, qu'on lave, qu'on sèche et le cas échéant qu'on calcine le pigment ainsi recouvert.

8. Procédé selon la revendication 7, caractérisé en ce qu'on utilise comme composé de silicium inorganique soluble dans l'eau le silicate de sodium.

9. Procédé selon la revendication 7 ou 8, caractérisé en ce que le recouvrement ultérieur s'effectue sur un pigment déjà calciné ou simplement séché ou dans un procédé intégré après la préparation du pigment.

10. Application des pigments à surface modifiée selon la revendication 1 dans des formulations comme les colorants, les vernis, les encres d'imprimerie, les matières synthétiques et dans la préparation des cosmétiques.

11. Formulations contenant des pigments à surface modifiée selon la revendication 1.

12. Pigments à surface modifiée basés sur des substrats en forme de feuillets et qui sont recouverts d'un oxyde métallique coloré ou incolore seul ou mélangé en une couche unique ou en couches successives et qui sont encore recouverts, pour améliorer leur comportement de dépôt et de remuage, de 0,5-30% en poids par rapport à la totalité du pigment d'un mélange d'oxydes métalliques constitué de $ZrO_2/SiO_2$ , où l'on prépare en une suspension aqueuse de pigment deux composés de silicium et de zirconium solubles dans l'eau de manière que les oxydes solubles dans l'eau se déposent sur le pigment, et qu'on sépare, qu'on lave et qu'on sèche le pigment ainsi recouvert.

13. Application des pigments à surface modifiée selon la revendication 12 dans des formulations comme les colorants, les vernis, les encres d'imprimerie, les matières synthétiques et dans la préparation des cosmétiques.

14. Formulations contenant des pigments à surface modifiée selon la revendication 12.